# EUROPEAN PATENT APPLICATION

(11) **EP 4 080 892 A1**
(43) Date of publication of application: **26.10.2022**
(21) Application number: 21305520.5
(22) Date of filing: 20.04.2021
(51) Int. Cl.: H04N 21/2343, H04N 21/2662, H04N 21/63

(54) **METHOD FOR PLAYING ON A PLAYER OF A CLIENT DEVICE A CONTENT STREAMED IN A NETWORK**

(71) Applicant: Streamroot, 75001 Paris (FR)
(72) Inventor: YOUSEF, Hiba, 75013 PARIS (FR); STORELLI, Alexandre, 75012 PARIS (FR)
(74) Representative: Regimbeau

(57) **Abstract**

The present invention relates to a method for playing on a player of a client device (11) a content streamed in a network (1), said content consisting of a sequence of segments available in a plurality of quality levels, the player being configured to request segments at a selectable quality level; the method being characterized in that it comprises performing by a processing unit (110) of the client device (11):
(a) obtaining from the network (1) a model approximating an Adaptive BitRate, ABR, logic for choosing said quality level of the segments as a function of at least one parameter representative of a segment reception rate;
(b) determining, according to said obtained model, a first quality level at which the player would have requested a current segment if the player was applying said ABR logic;
(c) configuring the player to select said first quality level as quality level for requesting segments.

## Description

### FIELD OF THE INVENTION

The present invention relates to a method for playing a content streamed for example in a peer-to-peer network.

### BACKGROUND OF THE INVENTION

"Streaming" designates a "direct" audio or video stream playing technique, that is while it is recovered from the Internet by a client device. Thus, it is in contrast with downloading, which requires to recover all the data of the audio or video content before being able to play it.

In the case of streaming, storing the content is temporary and partial, since data is continuously downloaded in a buffer of the client (typically the random access memory), analyzed on the fly by its processor and quickly transferred to an output interface (a screen and/or loudspeakers) and then replaced with new data.

Traditionally, the content is provided by streaming servers (referred to as a content delivery network, or CDN). The client which desires to access the content sends a request to recover first segments therefrom (by segment, it is intended a data block of the content, corresponding generally to a few seconds of playing). When there is sufficient data in the buffer to enable the beginning of the content to be played, playing starts. In the background, the stream downloading continues in order to uninterruptedly supply the buffer with the remaining part of the content.

However, it is noticed that this approach has limits if a great number of clients desire to play the same content simultaneously: the server is found to be saturated, being incapable of providing the content at a sufficient rate for playing to be fluid, and jerks occur.

Recently, an alternative strategy based on "peer-to-peer" (P2P) has been suggested, in which each client acts as a server for other clients: they are called peers. A peer which has started playing the content can forward to others segments it has already received, and so on, hence, easier broadcasting regardless of the number of clients being interested. This strategy is described in the international application WO 2012/154287.

However, most players implement what is known as Adaptive BitRate (ABR) and may be problematic when combined with P2P.

The general idea of the ABR is to allow the automatic variation of the quality of the recovered segments according to the "capacities" of a peer. More precisely, each segment is available at several quality levels corresponding to several bitrates, i.e. data rates. It is indeed to be understood that a segment of better quality has better resolution, more frames per second, etc., and is consequently larger than the same segment in lower quality, therefore, it is necessary to support a higher data rate.

During ABR streaming, for each segment an algorithm automatically determines according to a given logic (referred to as "ABR logic") the best quality that can be chosen, generally in view of two criteria which are the observed bandwidth and/or the buffer filling rate.

In the first case, if the algorithm judges that the estimated bandwidth is sufficient to support higher quality, then it will instruct the client to switch to this (or conversely to lower the quality if the bandwidth is too low). In the second case, the principle is to divide the buffer memory into different intervals, each interval corresponding to an increasingly higher quality as the filling of the buffer memory increases (or more and less if it decreases).

Among known ABRs, there exists very good algorithms that manage to achieve near optimal performance, such as ABMA or MPC.

However, their main problem is the computational complexity. Despite their near optimal bitrate selection, they are not recommended for continuous use because they add additional computation time which affects the CPU power, especially P2P clients that are generally low-resource computers such as laptops or mobile terminals. This is not practical for short-duration segments when this time exceeds the duration, nor it is for low latency applications.

It would, therefore, be desirable to improve the efficiency of existing ABRs, without degrading their performances.

The present invention improves this situation.

### SUMMARY OF THE INVENTION

For these purposes, the present invention provides a method for playing on a player of a client device a content streamed in a network, said content consisting of a sequence of segments available in a plurality of quality levels, the player being configured to request segments at a selectable quality level; the method being characterized in that it comprises performing by a processing unit of the client device:
(a) obtaining from the network (1) a model approximating an Adaptive BitRate, ABR, logic for choosing said quality level of the segments as a function of at least one parameter representative of a segment reception rate;
(b) determining, according to said obtained model, a first quality level at which the player would have requested a current segment if the player was applying said ABR logic;
(c) configuring the player to select said first quality level as quality level for requesting segments.

Preferred but non limiting features of the present invention are as it follows:
Said ABR logic is defined by a first function of said at least one parameter representative of a segment reception rate, said model approximating the first function, and step (b) being performed by applying the obtained model to said at least one parameter representative of a segment reception rate.

Said player implements said ABR logic, but is configured to not apply it.

Said model is trained from a database of training examples each associating a vector of measured parameters representative of a segment reception rate with the corresponding quality level subsequently chosen by a player applying said ABR logic.

Said model is trained by a server of the network, step (a) comprises receiving the trained model from the server, said training examples being collected by the server from client devices of the network with any player applying said ABR logic.

One of steps (a) to (c) comprises configuring the player to not apply the ABR logic, the method comprising a previous step (a0) of playing on the player of the client device a content streamed in a network while applying said ABR logic so as to generate training examples, then providing the generated examples to the server.

The method comprises configuring the player to not apply the ABR logic is performed if said client device is selected by the server among client devices of the network.

Step (c) comprises receiving from the player a request for said current segment at the selected first quality level.

The client device comprises a first buffer for storing segments in a format adapted for transferring within the network, the method comprising a step (d) of providing the requested current segment from the first buffer.

The client device further comprises a second buffer for storing segments in a format adapted for being played by the player, said current segment being provided at step (d) to said second buffer.

Said parameter representative of a segment reception rate is chosen among a buffer level of the first buffer and/or of the second buffer and a bandwidth.

The method comprises before step (d), if said next segment is not present at said first quality level in the first buffer, fetching said next segment at said first quality level from the network.

According to a second aspect, the invention provides a device for playing on a player a content streamed in a network, said content consisting of a sequence of segments available in a plurality of quality levels, the player being configured to request segments at a selectable quality level, the client device being characterized in that it comprises a processing unit implementing:
(a) obtaining from the network a model approximating an Adaptive BitRate, ABR, logic for choosing said quality level of the segments as a function of at least one parameter representative of a segment reception rate;
(b) determining, according to said obtained model, a first quality level at which the player would have requested a current segment if the player was applying said ABR logic;
(c) configuring the player to select said first quality level as quality level for requesting segments.

According to a third and a fourth aspect the invention provides a computer program product comprising code instructions to execute a method according to the first aspect for playing on a player of a client device a content streamed in a network; and a computer-readable medium, on which is stored a computer program product comprising code instructions for executing a method according to the first aspect for playing on a player of a client device a content streamed in a network.

### BRIEF DESCRIPTION OF THE DRAWINGS

The above and other objects, features and advantages of this invention will be apparent in the following detailed description of an illustrative embodiment thereof, which is to be read in connection with the accompanying drawings wherein:
- Fig. 1 represents an architecture for implementing the method according to the invention;
- Fig. 2 illustrates a preferred embodiment of the method according to the invention.

### DETAILED DESCRIPTION OF A PREFERRED EMBODIMENT

### Architecture

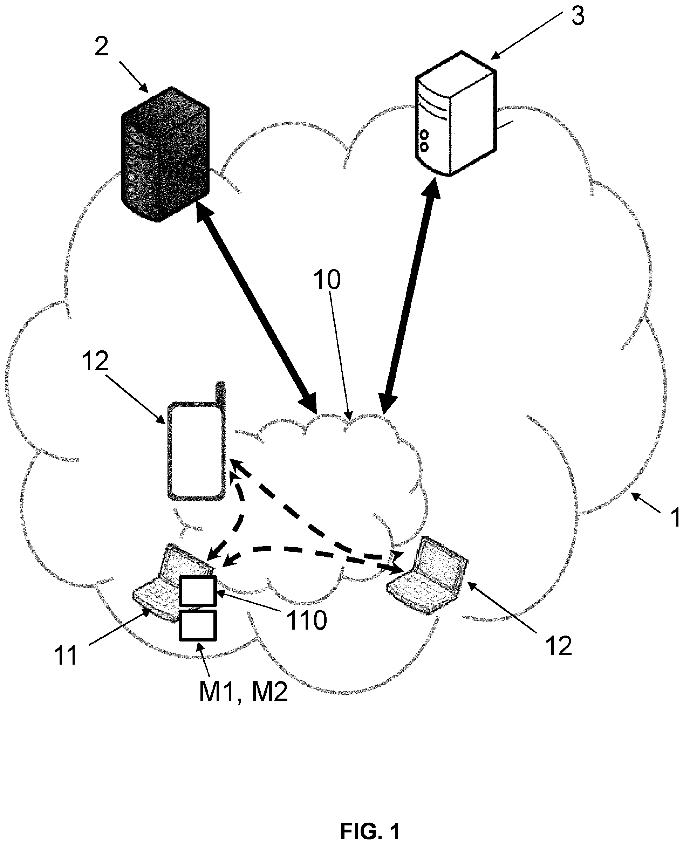

In reference to **Figure 1****,** the invention relates to a method for playing a content streamed within a network 1 (advantageously within a peer-to-peer network 10 of client devices 11, 12) using a model for approximating an ABR logic for a player of a client device 11, advantageously trained according to a dedicated training method.

Network 1 is herein a large scale telecommunications network and in particular the Internet. This network 1 comprises the peer-to-peer network 10 of client devices 11, 12. Each client device 11, 12 is typically a personal computing device such as a smartphone, a PC, a tablet, etc. connected to the network 1, having a data processing unit 110 such as a processor, an interface for playing the content, and a storage unit such as a random access memory and/or a mass memory.

Playback is implemented by a player, that is to say an application executed by the data processing unit 110, which can be of a varied nature, for example a dedicated application, an internet browser in particular HTML5 compatible, an operating system module, etc. Note that the player may be defined by a name and a version.

We will assume in the following description that the player is "as is", i.e. not modified for the implementation of this process, or even for P2P streaming. In particular, the player is able to implement an adaptive bitrate (ABR) logic, in other words said content to be played consists of a sequence of segments available in a plurality of quality levels and the player is able, if this ABR logic is implemented, to decide autonomously which quality level to request, in accordance with this ABR logic. The various quality levels correspond to different bitrates, that is to say a variable volume of data per unit of time (and thus per segment). We naturally understand that better quality content requires a higher bit rate.

By "player able to implement an ABR logic" it is thus simply understood a player configured to request segments at a selectable quality level, i.e. having the capability to request segments at various quality levels, but the selection of the quality level may be completely manual by the user. Note that the quality level is usually selected among a list of possible quality levels.

Indeed, the player is simply required to be able to implement the ABR logic, not to mandatory implement it, which can be the case if for instance the player is a lightweight version of an existing player (today nearly every existing player implements an ABR logic). In particular the present player preferably implements an ABR logic.

If the player positively implements an ABR logic (which is the case of most existing players as explained), it is assumed that this ABR logic can be switched off, i.e. the player always presents a manual mode allowing a manual selection. In other words, if the ABR logic is applied, said quality level is automatically selected, and if the ABR logic is not applied (if the ABR logic is switched off or if there is not any ABR logic implemented), said quality level is manually selected.

Generally, players have a selector allowing the user to choose at once between various quality levels and the ABR logic, for example a selection between "Auto" (ABR on), "240p", "480p", "720p" and "1080p" (manual selection between four quality levels - ABR off).

More details will follow regarding the concept of ABR logic, it is only to be understood that in the context of the present method it is not necessary that the ABR logic is controllable or even known: the present method is completely universal and can be adapted to any player able to implement any ABR logic on the basis of any criteria. It will be assumed that the ABR logic is predefined and that the client software (see below) only undergoes it.

Furthermore, the client device 11 (and more precisely its storage unit) has preferably two memories M1 and M2, referred to as "buffers", typically two zones of a random access memory, each being able to store (in a different way as will be seen) all or part of the content temporarily (by temporarily, it is meant that the segments are deleted from this memory shortly after they have been played: they are not stored in the long term as is the case for a direct downloading). As will be seen later, in the preferred case of playing via a browser, all the segments are typically deleted (i.e. the buffers are reinitialized) at the latest when the browser or tab in which the video is played is closed.

The first buffer M1 is called "peer-to-peer cache". It stores segments under a so-called "raw" format. By raw segments, it is meant a format adapted for transferring within the network 1, in particular within the peer-to-peer network 10, but not adapted for playing on the device 11.

The second buffer M2 is called "video buffer". It stores segments under a so-called "converted" format. By converted segments, it is meant converted from the raw segments under a format adapted for playing on the device 11, but not adapted for transferring within the peer-to-peer network 10.

As explained in the introductory part, these devices 11, 12 are preferably "peers" (also called "nodes") of the peer-to-peer network 10.

By "client devices 11, 12 of a peer-to-peer network 10", it is meant devices connected in the network 1 by a peer-to-peer network protocol. In other words, the data processing units for each peer implement a particular program (client software, referred to as "peer agent", PA), which can be integrated with the player (for example an extension of a web browser), be a dedicated application, or even be embedded into any other software (for example the operating system of an internet access box, or a multimedia box, i.e. a "Set-top box"), for using the peer-to-peer. The present method is mainly implemented via this client software. In the following description, it will be assumed that the client software is in communication with the player so as to provide it with segments, while operating independently. More precisely, we understand that the role of the player is the playing in itself, i.e. the rendering of the segments, while the role of the client software is simply obtaining the segments for the player, the client software undergoing the operation of the player.

As explained, a peer-to-peer network, or P2P, is a decentralized subnetwork within the network 1, wherein data can be directly transferred between two client devices 11, 12 of the peer-to-peer network 10, without passing through a central server. Thus, it enables all the client devices 11, 12, to play both the role of client and server. The peers 11, 12 are thus defined as "seeders" (or data suppliers) and/or "leechers" (or data receivers).

Said content, which is in particular an audio or video content, that is a media of some length, consists of a sequence of segments (called a "playlist") stored in data storage means of a server 2 connected to the peer-to-peer network 10. The segments have a predetermined length, typically one or two seconds of the content, but it can range from a fraction of a second to about ten seconds. All the segments of a given content have generally the same length.

The server 2 is a content server, advantageously present in network 1 and connected to the peer-to-peer network 10. In other words, this is one (or more) server(s) of the Internet network 1 providing the segments of various contents in accordance with a given streaming protocol. For example, the HLS ("HTTP Live Streaming") will be mentioned, in which segments are "ts" files, listed in a "m3u8" playlist file. HLS involves the MPEG2 or the fragmented MP4 format for the content. DASH, Smooth streaming, or HDS streaming protocols will also be mentioned. The raw segments may be shared between peers via a protocol of the WebRTC or direct UDP type.

The server 2 is the primary source of the segments, insofar as initially no peer has the content (before a first transfer of the server 2 to this peer 11, 12). The contents are either at the very beginning stored integrally on the server 2 (case of the VOD previously discussed), or generated in real time (case of the live streaming), and in the latter case, the list of segments making it up dynamically changes over time.

Live streaming proposes to broadcast in real time contents associated with "live" events, for example concerts, meetings, sports events, video games, etc., which are simultaneously happening. With respect to streaming of already integrally existing content as a film, a live streaming broadcast content is actually generated gradually as the associated event happens. Technically, as in the case of a live event on TV, such content can only be broadcast with some delay, which the user wishes to be as small as possible. This delay is typically in the order of thirty seconds, but can go down to about ten seconds. Thereby, a playlist of only a few segments (at most some tens) is available at each instant, the segments of this list being dynamically renewed in accordance with a turnover: as the event happens, new segments are created, "age", are received and played by clients (at the end of the expected delay), and finally exit the list.

In the latter case (live streaming), the content should rather be seen as a continuous stream. The sequence of segments is thereby dynamic, that is it is regularly updated. Each time a new segment is generated, it is added at the end of the sequence, and the first segment of the sequence (the oldest) is deleted. All the others are offset according to a turnover mechanism which can be related to a FIFO ("first in, first out") list. The first segment of the list (the oldest one) can be either a "live" or "past" segment. The "live" segment is the segment at the playing edge, and thus, the segments are deleted from the playlist as soon as they are played. The "past" segment exists when the content server 2 accepts that the content is played with some delay e.g. DVR (Digital Video Recorder) and other platforms that allow live streaming with up to a 2h delay.

The present method may be implemented in any context.

The peer-to-peer network 10 is also connected to a peer management server 3 called a "tracker". The tracker 3 has data processing means and storage means. It coordinates exchanges between peers 11, 12 (by controlling the client software implemented by each of the client devices 11, 12), but it is not directly involved in data transfer and does not have a copy of the file.

As explained, a dedicated method for training the model for approximating an ABR logic for the player may be implemented, preferably by a dedicated server 4 but possibly by a client device 11 (or of another client device 12) or even directly by the peer management server 3.

As it will be explained, the equipment performing the training has to store a training database made of data associated to a plurality of training segments already requested by the player (pairs of a vector of parameters representative of a segment reception rate measured when said training segment has been requested to the player and the corresponding quality level subsequently chosen by any player applying said ABR logic).

### ABR logic

As already explained, when applied the ABR logic makes the player of the client device 11 to choose the quality level of the segments as a function of at least one parameter representative of a segment reception rate.

In any case, said ABR logic can be defined by means of a first function making it possible to calculate the quality level to be chosen (the bitrate) as a function of said at least one parameter representative of a reception rate of segments. More precisely, said first function is generally called by the player at each segment received, and the output is the quality level at which the next segment will be requested. Note that said output can be expressed in particular as an integer level number (for example between 1 and L, where 1 is the worst quality and L is the best quality or the opposite), or directly as a bitrate value (either a discrete value chosen among a possible bit rate values, or a continuous bitrate value). Said first function is supposed to be a "black box".

It is understood that said parameter representative of a segment reception rate is a monitored parameter, which can be any parameter illustrating the capacity of the device 11 and / or of the network 1 to receive the segments "fast enough". As mentioned, the known ABR logics generally use as a parameter a buffer level of the second buffer memory M2 (either in value, i.e. in seconds or in number of segments, or in rate) and/or a bandwidth (i.e. the data reception rate observed).

In other words, the player monitors the bandwidth and/or the buffer level, and consequently makes decisions as to whether or not to modify the quality level of the segments required.

Note that other parameters are sometimes taken into account, such as device capabilities (including the CPU/GPU load and decoding capabilities, available memory, screen size, etc.) and/or user geographical location.

Thus, there are three main classes of ABR logic:
- The "BB" class, for buffer-based ABR logic;
- The "RB" class, for rate-based ABR logic;
- The "H" class, for hybrid (buffer-rate-based) ABR logic.

Note there might be further classes. The following specification will take the example of these three classes but the skilled person will understand that the present method is not limited to any set of possible ABR logic classes.

### Model approximating the ABR logic

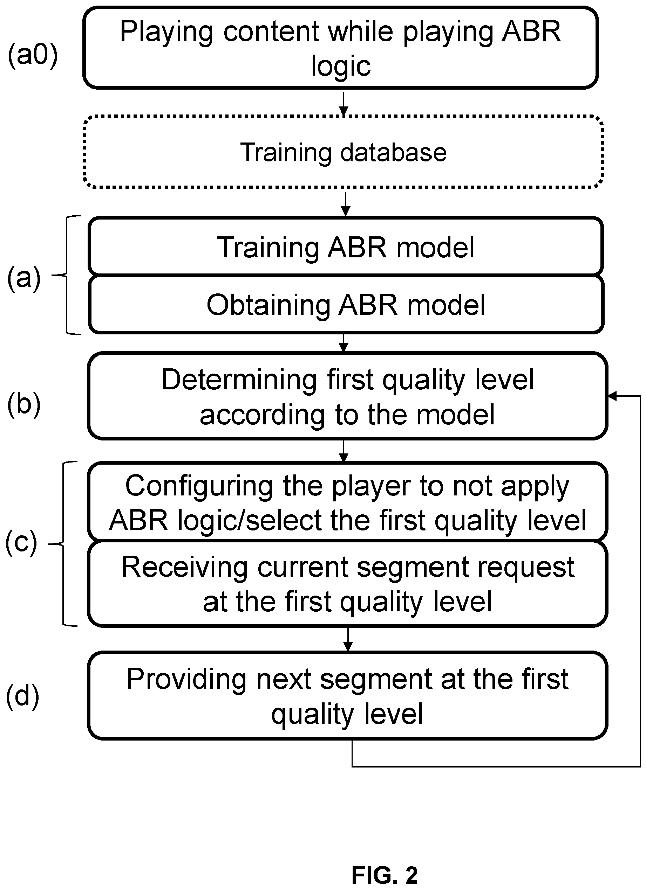

The present method uses a model approximating the ABR logic, i.e. approximating the above-mentioned first function defining the ABR logic, regardless of the actual class of the ABR logic. Thus, as illustrated by figure 2, the method starts with a step (a) of obtaining from the network the model approximating the ABR logic for choosing said quality level of the segments as a function of at least one parameter representative of a segment reception rate.

Indeed, instead of letting the player automatically select the quality level by applying said ABR logic (which may add heavy computational complexity), the present method proposes to use said model approximating the ABR and then to override the selection of the quality level (i.e. to "manually" select it like a user could do) according to the result of the model.

Thus, the model acts as a "lightweight" ABR, without the need to modify the player thanks to the external selection. To rephrase again, the ABR is "outsourced".

If the player of the client device 11 implements an ABR, said ABR is switched off (i.e. the player is configured to not apply said ABR logic). Note that the ABR logic which is approximated by the model could actually be different from the implemented ABR logic, and even a more efficient one (preferably it is the same).

Said model may be predefined, but preferably machine learning (ML) algorithms can be used to train the model, as proposed in the application EP20305202.

Mathematically, a vector of parameters can be built for any given segment (once requested and received by the player), where the vector of parameters is representative of a segment reception rate measured when said given segment has been requested by any given player (i.e. an "input vector" *x^{m}* for a segment *m* ∈ 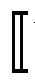 1;*M* 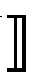 ) associated to the corresponding quality level subsequently chosen by said given player when applying the ABR logic (i.e. the "scalar output" *y^{m}* = [*brₘ*], *brₘ* being the bitrate decision for the segment *m*). Note that said given player could be any player of any client device 11, 12, provided that it applies the same ABR logic to be approximated.

The idea is to include in the input vector *x^{m}* any possible parameter representative of a segment reception rate so as to encompass any possible ABR class and logic, such as *bₘ* the buffer level at which the segment *m* is requested, *sₘ* the segment size, *tₘ* the segment download time, *bwₘ* the measured bandwidth of segment *m, bw*_{*m*-1} the measured bandwidth for the previous segment, etc.

The pair of an input vector *x^{m}* and the corresponding scalar output *y^{m}* is denoted a training example, and a database of training examples may be built for performing a machine learning algorithm so as to train a model. It is to be understood that, as explained, each training example corresponds to the actual reception of a given segment (that can be referred to as a training segment) by a player. In other words, each training example associates a vector of parameters representative of a segment reception rate measured when a training segment has been received by the player, and the corresponding quality level subsequently chosen by the player applying said ABR logic for requesting the next segment.

Said model can be defined as the relation between the input and the output, in particular a "hypothesis" *h_{θ}* parameterized with a vector *θ* of model parameters such that for each input vector *x^{m}* the value *h_{θ}*(*x^{m}*) is as close as possible to *y^{m}*.

Thus, by measuring in real time the current parameters representative of a segment reception rate and generating a current input vector *xⁱ*, the hypothesis *h_{θ}*(*xⁱ*) can be used to predict the output *ŷⁱ* which is the bitrate at which next segment will be requested by a player applying said ABR logic.

Thus, step (a) advantageously comprises training the model from said database of training examples each associating a vector of measured parameters representative of a segment reception rate (i.e. measured for a given segment, when it had been requested by the player) with the corresponding quality level subsequently chosen by a player applying said ABR logic (when requesting the next segment).

Note that any type of model and any kind of machine learning algorithm may be used.

Preferably, the model is a classifier (as the quality level is typically selected among a list of possible quality levels), but alternatively, it may be a linear function approximating said first function (linear regression), in particular learnt by linear least square (LLS) techniques, in particular ordinary least squares (OLS) techniques, but the skilled person could use other models (notably polynomial, non-linear, etc.) and other machine learning techniques (Bayesian, k-Nearest Neighbors, Support Vector Machine, etc.).

As explained, the training may be performed locally by the client 11, or in a centralized way at the server 4, and then the model is shared with the client devices 11, 12. In any case, the training examples may be transmitted within the network 1 for constituting the training database. For example, training data may be collected from various client devices 11, 12 at the server 4.

In particular, there may be at least one "active" client device 12 and at least one "passive" client device 11, such that:
- the so-called active client devices 12 (for instance the ones with large computational resources) apply the ABR logic so as to generate training examples,
- the so-called passive client devices 11 do not apply the ABR logic but use the model trained from the training examples provided by the active client devices 12.

In a particularly preferred embodiment, some or even all client devices could be first active devices then become passive devices. Indeed, there may be a "booting phase" wherein most client devices act as active devices (i.e. apply the ABR logic) in order to collect a large number of training examples. Then the model is trained then shared so that the client devices can switch from the active role to the passive role and use instead the model as "lightweight" ABR. Note that a sampled (possibly randomly) population of the client devices could nevertheless keep the active role on a permanent basis to check that the ABR behaves similarly to what the model has been trained against.

In such an embodiment, the method comprises a previous step (a0) of playing on the player of the client device 11 a content streamed in a network 1 while applying said ABR logic (the client device has temporarily the active role) so as to generate training examples, then providing the generated examples to the server 4.

Afterwards, the client device 11 configures the player to not apply the ABR logic, i.e. it switches to the passive role. Note that it could be triggered by simply configurating the player to select a given quality level as quality level for requesting segments, as most players have as explained a single selector allowing to select at once the ABR logic or a specific quality level.

The server 4 could itself select the client device(s) 11, 12 to switch or not to the passive role, i.e. perform their sampling. In other words, configuring the player to not apply the ABR logic is advantageously performed if said client device 11 is selected by the server 4 among client devices 11, 12 of the network 1, after having trained the model: the client device 11 may be instructed by the server 4 to configure the player to not apply (anymore) the ABR logic, but alternatively it can be triggered by simply providing the trained model to the client device 11. As explained, said selection of the client devices may be random, or according to a pattern (for instance so as to keep a representative subset of hardware).

Alternatively, the training could be performed purely offline and each client device 11, 12 could have only the passive role.

### Using the model as lightweight ABR

In the following description, we focus on client device 11 (having the role of passive device) which is trying to retrieve the content from other devices 12 and / or the server 2, that is to say, the first buffer M1 already stores at least one raw segment, in at least one quality level, if possible a sub-sequence of the sequence constituting the content.

As explained, the model is supposed to be already trained, and the method begins with the implementation by the processing means 110 of the device 11 of a step (a) of obtaining the model from the network 1 the model approximating the ABR logic for choosing said quality level of the segments as a function of at least one parameter representative of a segment reception rate. Note that as explained the occurrence of step (a) could be subjected to the selection of the client device 11 by the server 4, and in particular providing the model to the client device 11 may trigger the configuration of the player to not apply the ABR logic, and to apply the model instead.

In a step (b), the device 11 determines, according to said obtained model, a quality level, referred to as "first quality level", at which the player would have requested a current segment if the player was applying said ABR logic. In other words, the device 11 applies the model to said at least one parameter representative of a segment reception rate, the output being the first quality level.

Step (b) includes, if necessary, the "measurement" of said at least one parameter representative of a segment reception rate (to be used by the model). Note that the bandwidth as parameter representative of a segment reception rate may be smoothed (EWMA or any other methods) to help in smoothing the quality transitions.

Then, the player is configured in step (c) to select said first quality level as quality level for requesting segments. To this end, the peer agent of the client device 11 may implement a connector for instructing the player to specifically select the quality level, in a similar way as the user would manually do. Note that said connector could be further able to switch off the ABR logic (if implemented) when the model is received. From the point of view of the player, these actions are merely change of settings. As explained, if the player was at this stage still applying the ABR logic, manually selecting a quality level deactivates the ABR logic.

Therefore, step (c) may further comprise receiving from the player a request for a segment (referred to as "current segment"), in practice the next segment to be put in the second buffer memory M2 (not necessarily the next segment to played, there are normally several segments buffered in advance), in said first quality level, as the result from the selection of this quality level. In other words, the player enforces the ABR decisions from the model.

It is assumed that said segment is at least partially available at this stage (i.e. at least a fragment) in the first buffer M1, in the first quality required by the player. If this segment / segment fragment was in another quality, it would have to be retrieved again, generally directly from the content server 2 because we are running out of time.

Note that it is guaranteed that the player will request the current segment at the first quality level, as the ABR logic is not applied and the first quality manually selected. However, in rare cases the ABR logic could actually choose another quality level if applied, i.e. the first quality level could be wrong (as the model only approximates said ABR logic), but it cannot be known by the player. Indeed, the model is assumed to be reliable.

Then, in a further step (d) the current segment (segment m) is provided, from the first buffer M1, in response to the request, at the first quality level. The segment is preferably provided to the second buffer M2, and as such step (d) can comprise the conversion into a format suitable for playing said segment. This consists in transforming the raw segment into a converted segment, which can be read by the player of the device 11, unlike the raw one.

For example, if the player is the built-in player of an HTML5 compatible browser, the conversion consists of injecting the segment's video data using the Media Source Extension API of the browser

Naturally, step (d) advantageously comprises simultaneously playing a previous segment (for instance segment *m* - 1, but possibly an even older segment) stored in the second buffer memory M2, so that the segments need to be renewed. The segment retrieved in step (d) will soon be read in turn.

We can now repeat steps (b) to (d) as long as the playing lasts: the next segment (i.e. segment *m* + 1) is now the new current segment, and a second quality level can be determined (possibly the same as the first quality level) using the model.

In other words, a new occurrence of step (c) consists in receiving from the player a request for the next segment at the second quality level. Again, a third quality level may be determined for the next segment (i.e. segment *m* + 2), etc.

### Pre-fetching

As proposed in the application EP20315054, the present method may comprise (before step (d)), if said current segment (segment *m*) is not present at said first quality level in the first buffer M1), fetching it from the network 1 (i.e. performing "pre-fetching", as we are at least one segment ahead).

In other words, the first quality level is already known at step (b), even before the request for the current segment is actually received (step (c)). Thus, if there is a switch in quality (if the first quality level is different from a previous quality level) the switch can be anticipated, so as to save bandwidth. Indeed, if the segment was fetched at the previous quality level, the first buffer M1 would have to discard it if the first quality level was different from the previous quality level. As the first quality level is taken into account in advance, bandwidth is saved.

By "fetching", it is meant obtaining said segment from the network 1, by download to the P2P cache M1 from at least one another peer 12 of the P2P network 10 and/or from the content server 2 (CDN), as it explained in the application EP20315054. Note that said next segment may actually have already been entirely downloaded, in particular if the first quality level is the same as the previous quality level, so that no further action is necessary.

It is of course preferred to pre-fetch from the P2P network 10, but it may be enabled to pre-fetch from the CDN 2:
- If a big part of the segment can be obtained from P2P network 10 in time (before the expiration of the response delay), then the CDN can be used to download the small part left.
- If the CDN is slower than P2P, but the peers do not have all segments, the missing segments can be scheduled very early to get them from CDN and get the rest from peers.
- If peers have the next segments on a higher quality level than the available one, but some segments (or parts of the next segments) are missing, the CDN can be used to fetch the missing data.

### Device and computer program product

According to a second aspect, the invention concerns the device 11 for performing the previously described method for playing a content (streamed in a peer-to-peer network 10 of client devices 11, 12) on a player of the device 11 configured to request segments at a selectable quality level.

This device 11 comprises as explained:
- a first buffer M1 (P2P cache) for storing segments in a format adapted for transferring within the peer-to-peer network 10;
- Preferably a second buffer M2 (video buffer) for storing segments in a format adapted for being played by the player;
- a processing unit 110.

The processing unit 110, typically a processor, is implementing the following steps:
(a) obtaining from the network (1) a model approximating an Adaptive BitRate, ABR, logic for choosing said quality level of the segments as a function of at least one parameter representative of a segment reception rate;
(b) determining, according to said obtained model, a first quality level at which the player would have requested a current segment if the player was applying said ABR logic;
(c) configuring the player to select said first quality level as quality level for requesting segments.

In a third and fourth aspect, the invention concerns a computer program product comprising code instructions to execute a method (particularly on the data processing unit 110 of the device 11) according to the first aspect of the invention for playing on a player of a client device 11 a content streamed in a peer-to-peer network 10 of client devices 11, 12, and storage means readable by computer equipment (memory of the device 11) provided with this computer program product.

## Claims

**1.** A method for playing on a player of a client device (11) a content streamed in a network (1), said content consisting of a sequence of segments available in a plurality of quality levels, the player being configured to request segments at a selectable quality level; the method being **characterized in that** it comprises performing by a processing unit (110) of the client device (11):
(a) obtaining from the network (1) a model approximating an Adaptive BitRate, ABR, logic for choosing said quality level of the segments as a function of at least one parameter representative of a segment reception rate;
(b) determining, according to said obtained model, a first quality level at which the player would have requested a current segment if the player was applying said ABR logic;
(c) configuring the player to select said first quality level as quality level for requesting segments.

**2.** A method according to claim 1, wherein said ABR logic is defined by a first function of said at least one parameter representative of a segment reception rate, said model approximating the first function, and step (b) being performed by applying the obtained model to said at least one parameter representative of a segment reception rate.

**3.** A method according to any one of claims 1 and 2, wherein said player implements said ABR logic, but is configured to not apply it.

**4.** A method according to any one of claims 1 to 3, wherein said model is trained from a database of training examples each associating a vector of measured parameters representative of a segment reception rate with the corresponding quality level subsequently chosen by a player applying said ABR logic.

**5.** A method according to claim 4, wherein said model is trained by a server (4) of the network (1), step (a) comprises receiving the trained model from the server (4), said training examples being collected by the server (4) from client devices (11, 12) of the network (1) with any player applying said ABR logic.

**6.** A method according to claims 3 and 5 in combination, wherein one of steps (a) to (c) comprises configuring the player to not apply the ABR logic, the method comprising a previous step (a0) of playing on the player of the client device (11) a content streamed in a network (1) while applying said ABR logic so as to generate training examples, then providing the generated examples to the server (4).

**7.** A method according to claim 6, wherein configuring the player to not apply the ABR logic is performed if said client device (11) is selected by the server (4) among client devices (11, 12) of the network (1).

**8.** A method according to one of claims 1 to 7, wherein step (c) comprises receiving from the player a request for said current segment at the selected first quality level.

**9.** A method according to claim 8, wherein the client device (11) comprises a first buffer (M1) for storing segments in a format adapted for transferring within the network (1), the method comprising a step (d) of providing the requested current segment from the first buffer (M1).

**10.** A method according to claim 9, wherein the client device (11) further comprises a second buffer (M2) for storing segments in a format adapted for being played by the player, said current segment being provided at step (d) to said second buffer (M2).

**11.** A method according to claim 10, wherein said parameter representative of a segment reception rate is chosen among a buffer level of the first buffer (M1) and/or of the second buffer (M2) and a bandwidth.

**12.** A method according to any one of claims 8 to 11, comprising before step (d), if said next segment is not present at said first quality level in the first buffer (M1), fetching said next segment at said first quality level from the network (1).

**13.** A device for playing on a player a content streamed in a network (1), said content consisting of a sequence of segments available in a plurality of quality levels, the player being configured to request segments at a selectable quality level, the client device (11) being **characterized in that** it comprises a processing unit (110) implementing:
(a) obtaining from the network (1) a model approximating an Adaptive BitRate, ABR, logic for choosing said quality level of the segments as a function of at least one parameter representative of a segment reception rate;
(b) determining, according to said obtained model, a first quality level at which the player would have requested a current segment if the player was applying said ABR logic;
(c) configuring the player to select said first quality level as quality level for requesting segments.

**13.** Computer program product comprising code instructions to execute a method according to one of claims 1 to 12 for playing on a player of a client device (11) a content streamed in a network (1), when said program is executed on a computer.

**14.** A computer-readable medium, on which is stored a computer program product comprising code instructions for executing a method according to any one of claims 1 to 12 for playing on a player of a client device (11) a content streamed in a network (1).
